# EUROPEAN PATENT APPLICATION

(11) **EP 4 717 481 A1**
(43) Date of publication of application: **01.04.2026**
(21) Application number: 24223311.2
(22) Date of filing: 26.12.2024
(51) Int. Cl.: B60H 1/00

(54) **THERMAL MANAGEMENT INTEGRATED MODULE AND NEW ENERGY VEHICLE**

(30) Priority: 30.09.2024 CN 202411390300
(71) Applicant: Zhejiang Leapmotor Technology Co., Ltd, Hangzhou, Zhejiang 310051 (CN)
(72) Inventor: YU, Zhinan, Hangzhou, Zhejiang, 310051 (CN); XIA, Junlei, Hangzhou, Zhejiang, 310051 (CN); ZHANG, Weiwei, Hangzhou, Zhejiang, 310051 (CN); ZHU, Jinyu, Hangzhou, Zhejiang, 310051 (CN); LIANG, Lili, Hangzhou, Zhejiang, 310051 (CN); ZHENG, Xiaohuan, Hangzhou, Zhejiang, 310051 (CN); ZHANG, Lili, Hangzhou, Zhejiang, 310051 (CN)
(74) Representative: Herrero & Asociados, S.L.

(57) **Abstract**

Thermal management integrated module including a refrigerant-side flow channel plate (100), a coolant-side flow channel plate (200), a refrigerant-side assembly (300), a coolant-side assembly (400), and a chiller, wherein the coolant-side assembly (400) is connected to the coolant-side flow channel plate (200), the coolant-side flow channel plate (200) is arranged with a plurality of first flow channels, the refrigerant-side assembly (300) and the chiller are respectively connected to the refrigerant-side flow channel plate (100), and the refrigerant-side flow channel plate (100) is arranged with a plurality of second flow channels.

## Description

### TECHNICAL FIELD

The present disclosure relates to the technical field of thermal management for new energy vehicles, and in particular, to a thermal management integrated module and a new energy vehicle.

### BACKGROUND

In response to the demands for safety, comfort, and economy in new energy electric vehicles, after taking into full account the energy flow of a battery, a motor, and a passenger cabin, it is still necessary to layout functional requirements with precision including decoupling and coupling of heat dissipation, heat storage and residual heat utilization of the motor, heat dissipation, heating and residual heat utilization of the battery, as well as cooling, heating, dehumidification, defrosting and defogging of the passenger cabin, etc. As a result, the number of components in the vehicle's thermal management system has significantly increased. However, in the related art, the degree of integration of thermal management system components is not high, or, for highly integrated solutions, there may be issues with heat transfer interference, leading to a reduced thermal efficiency.

### SUMMARY

Based on the above, it is necessary to provide a thermal management integrated module and a new energy vehicle to solve the issue in existing thermal management systems, where it is difficult to simultaneously achieve high integration and low heat transfer interference.

The present disclosure provides a thermal management integrated module, including:
a refrigerant-side flow channel plate, a coolant-side flow channel plate, a refrigerant-side assembly, a coolant-side assembly, and a chiller, wherein the coolant-side assembly is connected to the coolant-side flow channel plate, the coolant-side flow channel plate is arranged with a plurality of first flow channels, the refrigerant-side assembly and the chiller are respectively connected to the refrigerant-side flow channel plate, the refrigerant-side flow channel plate is arranged with a plurality of second flow channels;
wherein the coolant-side assembly and the chiller are communicated via each of the plurality of the first flow channels to form a plurality of coolant-side heat exchange open circuits, the refrigerant-side assembly and the chiller are communicated via each of the plurality of the second flow channels to form a plurality of refrigerant-side heat exchange open circuits, the plurality of the coolant-side heat exchange open circuits and the plurality of the refrigerant-side heat exchange open circuits perform heat exchange via the chiller;
wherein an end of the coolant-side flow channel plate away from the coolant-side assembly is connected to an end of the refrigerant-side flow channel plate away from the refrigerant-side assembly, the refrigerant-side flow channel plate is defined with an insulation groove penetrating along a thickness direction of the refrigerant-side flow channel plate, the insulation groove may be defined between at least part of adjacent second flow channels to block a heat transfer between the adjacent second flow channels.

In some embodiments, the coolant-side assembly comprises a motor electric water pump, a battery electric water pump, a control valve, and an integrated water tank, the control valve is a multi-port valve, the multi-port valve is defined with a first communication port , a second communication port, a third communication port , a fourth communication port, and a fifth communication port, the first communication port communicates with the motor electric water pump, the second communication port communicates with an outlet of a motor assembly, the third communication port communicates with the battery electric water pump, the fourth communication port communicates with an outlet of a power battery, and the fifth communication port communicates with an inlet of a low-temperature radiator;
wherein in a first mode, the power battery, the fourth communication port, the first communication port, the integrated water tank, the motor electric water pump, the motor assembly, the second communication port, the third communication port, the battery electric water pump, the chiller, and the power battery are sequentially communicated;
wherein in a second mode, the power battery, the fourth communication port, the fifth communication port, the low-temperature radiator, the integrated water tank, the motor electric water pump, the motor assembly, the second communication port, the third communication port, the battery electric water pump, the chiller, and the power battery are sequentially communicated;
wherein in a third mode, the motor assembly, the second communication port, the first communication port, the integrated water tank, and the motor electric water pump are sequentially communicated; and the power battery, the fourth communication port, the third communication port, the battery electric water pump, the chiller, and the power battery are sequentially communicated;
wherein in a fourth mode, the motor assembly, the second communication port, the fifth communication port, the low-temperature radiator, the integrated water tank, and the motor electric water pump are sequentially communicated; and the power battery, the fourth communication port, the third communication port, the battery electric water pump, the chiller, and the power battery are sequentially communicated;
wherein in the first mode and the third mode, a portion of a coolant enters the motor electric water pump from the first communication port through the integrated water tank, another portion of the coolant directly enters the motor electric water pump from the first communication port;
wherein in the second mode and the fourth mode, a portion of the coolant enters the motor electric water pump from the low-temperature radiator through the integrated water tank, another portion of the coolant directly enters the motor electric water pump from the low-temperature radiator.

In some embodiments, the motor electric water pump, the battery electric water pump, and the integrated water tank are arranged around a periphery of the control valve.

In some embodiments, the integrated water tank and the coolant-side flow channel plate are connected by a bolted connection, and a connection part between the integrated water tank and the coolant-side flow channel plate is radially sealed by an O-shaped ring;
and/or, the control valve and the coolant-side flow channel plate are connected by the bolted connection, and a connection part between the control valve and the coolant-side flow channel plate is sealed at an end-face by an X-shaped ring;
and/or, the battery electric water pump and the coolant-side flow channel plate are connected by the bolted connection, and a connection part between the battery electric water pump and the coolant-side flow channel plate is radially sealed by the O-shaped ring;
and/or, the motor electric water pump and the coolant-side flow channel plate are connected by the bolted connection, and a connection part between the motor electric water pump and the coolant-side flow channel plate is radially sealed by the O-shaped ring.

In some embodiments, the refrigerant-side assembly comprises a gas-liquid separator and an electronic expansion valve, the electronic expansion valve comprises a first expansion valve, a second expansion valve, a third expansion valve, and a fourth expansion valve, the refrigerant-side assembly has a plurality of communication modes as follows:
in a first mode, a compressor, an outdoor heat exchanger, the second expansion valve, the chiller, the gas-liquid separator, and the compressor are communicated sequentially;
in a second mode, the compressor, the outdoor heat exchanger, the third expansion valve, an evaporator, the gas-liquid separator, and the compressor are communicated sequentially;
in a third mode, the first mode and the second mode are combined;
in a fourth mode, the compressor, the outdoor heat exchanger, the third expansion valve, the evaporator, the gas-liquid separator, and the compressor are communicated sequentially; and the compressor, an indoor condenser, the third expansion valve, the evaporator, the gas-liquid separator, and the compressor are communicated sequentially;
in a fifth mode, the compressor, the indoor condenser, the second expansion valve, the chiller, the gas-liquid separator, and the compressor are communicated sequentially; and the compressor, the indoor condenser, the third expansion valve, the evaporator, the gas-liquid separator, and the compressor are communicated sequentially;
in a sixth mode, the compressor, the indoor condenser, the third expansion valve, the evaporator, the gas-liquid separator, and the compressor are communicated sequentially;
in a seventh mode: the compressor, the indoor condenser, the first expansion valve, the outdoor heat exchanger, the gas-liquid separator, and the compressor are communicated sequentially; and
in an eighth mode: the compressor, the fourth expansion valve, the gas-liquid separator, and the compressor are communicated sequentially; and the compressor, the indoor condenser, the second expansion valve, the gas-liquid separator, and the compressor are communicated sequentially.

In some embodiments, the gas-liquid separator and the refrigerant-side flow channel plate are connected by a bolt connection, and an interface of the gas-liquid separator and an interface of the refrigerant-side flow channel plate are radially sealed by an O-shaped ring;
and/or, the chiller and the refrigerant-side flow channel plate are connected by the bolt connection, and an interface of the chiller and the interface of the refrigerant-side flow channel plate are radially sealed by the O-shaped ring.

In some embodiments, the coolant-side flow channel plate and the refrigerant-side flow channel plate are detachably connected;
or, the coolant-side flow channel plate and the refrigerant-side flow channel plate are welded;
or, the coolant-side flow channel plate and the refrigerant-side flow channel plate are integrally formed.

In some embodiments, the refrigerant-side assembly and the chiller are respectively and detachably connected to the refrigerant-side flow channel plate, and the coolant-side assembly is detachably connected to the coolant-side flow channel plate.

In some embodiments, the refrigerant-side assembly and the chiller are respectively welded to the refrigerant-side flow channel plate, and the coolant-side assembly is welded to the coolant-side flow channel plate.

In some embodiments, the coolant-side assembly further includes a water temperature sensor.

In some embodiments, the water temperature sensor and the coolant-side flow channel plate are connected by a snap-fit, and the water temperature sensor and the coolant-side flow channel plate are radially sealed by an O-shaped ring.

In some embodiments, the refrigerant-side assembly further includes at least one of a temperature sensor and a solenoid stop valve.

In some embodiments, the temperature sensor and the refrigerant-side flow channel plate are connected by a thread connection, and the temperature sensor and the refrigerant-side flow channel plate are radially sealed by an O-shaped ring.

In some embodiments, the solenoid stop valve and the refrigerant-side flow channel plate are connected by a thread connection, an interface of the solenoid stop valve and an interface of the refrigerant-side flow channel plate are radially sealed by an O-shaped ring.

The present disclosure further provides a new energy vehicle. The new energy vehicle includes any of the above-mentioned thermal management integrated modules.

Compared to the related art, it can be understood that in the thermal management integrated module and the new energy vehicle provided by the present disclosure, a circulation process of a refrigerant and a circulation process of a coolant are independent of each other. Therefore, by arranging the refrigerant-side flow channel plate and the coolant-side flow channel plate, and with the coolant-side assembly being arranged on a side of the coolant-side flow channel plate away from the refrigerant-side flow channel plate, and the refrigerant-side assembly being arranged on a side of the refrigerant-side flow channel plate away from coolant-side flow channel plate, it is possible to effectively avoid interference between the coolant-side assembly 400 and the refrigerant-side assembly during the arrangement process. This ensures that the layout of the thermal management integrated module is more reasonable.

Moreover, the coolant-side flow channel plate is arranged with the multiple first flow channels. The coolant-side assembly and the chiller may be communicated via each of the multiple corresponding first flow channels to form multiple coolant-side heat exchange open circuits. The refrigerant-side flow channel plate is arranged with the multiple second flow channels. The refrigerant-side assembly and the chiller may be communicated via each of the multiple corresponding second flow channels to form multiple refrigerant-side heat exchange open circuits. Therefore, compared to pipeline connections, this arrangement significantly reduces the assembly volume of the entire thermal management integrated module and significantly improves the assembly integration of the thermal management module.

Furthermore, the insulation groove may be defined between at least part of adjacent second flow channels and the insulation groove penetrates the refrigerant-side flow channel plate. Therefore, the heat transfer between the corresponding second flow channels is greatly reduced, effectively avoiding heat transfer interference issue in the thermal management integrated module.

### BRIEF DESCRIPTION OF THE DRAWINGS

To illustrate the technical solutions of the embodiments of the present disclosure or the related art, a brief introduction to the drawings used in some embodiments of the present disclosure or the related art is provided below. It is evident that the drawings described below are only some of the embodiments of the present disclosure, and for those skilled in the art, additional drawings may be derived based on these drawings without creative work.
FIG. 1 is a schematic structural view of a thermal management integrated module in some embodiments of the present disclosure.
FIG. 2 is a schematic side view of a thermal management integrated module in some embodiments of the present disclosure.
FIG. 3 is another schematic side view of a thermal management integrated module in some embodiments of the present disclosure.
FIG. 4 is a schematic partial structural view of a refrigerant-side flow channel plate in some embodiments of the present disclosure.
FIG. 5 is a schematic partial structural view of a coolant-side flow channel plate in some embodiments of the present disclosure.
FIG. 6 is a system connection diagram of a refrigerant-side heat exchange open circuit in some embodiments of the present disclosure.
FIG. 7 is a system connection diagram of a coolant-side heat exchange open circuit in some embodiments of the present disclosure.

### Reference numbers

100: refrigerant-side flow channel plate
110: insulation groove
120: second flow channel
200: coolant-side flow channel plate
210: first flow channel
300: refrigerant-side assembly
310: gas-liquid separator
320: pressure-temperature inductor
321: first pressure-temperature sensor
322: second pressure-temperature sensor
330: electronic expansion valve
331: first expansion valve
332: second expansion valve
333: third expansion valve
334: fourth expansion valve
340: solenoid stop valve
341: first stop valve
342: second stop valve
343: third stop valve
350: check valve
351: first check valve
352: second check valve
353: third check valve
360: temperature sensor
400: coolant-side assembly
410: motor electric water pump
420: battery electric water pump
430: integrated water tank
440: water temperature sensor
450: control valve
451: first communication port
452: second communication port
453: third communication port
454: fourth communication port
455: fifth communication port
500: chiller
610: power battery
620: motor assembly
630: low-temperature radiator
710: evaporator
720: outdoor heat exchanger
730: indoor condenser
740: compressor

### DETAILED DESCRIPTION

In response to the demands for safety, comfort, and economy in new energy electric vehicles, after taking into full account the energy flow of a battery, a motor, and a passenger cabin, it is still necessary to layout functional requirements with precision including decoupling and coupling of heat dissipation, heat storage and residual heat utilization of the motor, heat dissipation, heating and residual heat utilization of the battery, as well as cooling, heating, dehumidification, defrosting and defogging of the passenger cabin, etc. As a result, the number of components in the vehicle's thermal management system has significantly increased. However, in the related art, the degree of integration of thermal management system components is not high, or, for highly integrated solutions, there may be issues with heat transfer interference, leading to an increased thermal loss.

To solve the issue in existing thermal management systems, where it is difficult to simultaneously achieve high integration and low heat transfer interference, the present disclosure provides a thermal management integrated module and a new energy vehicle.

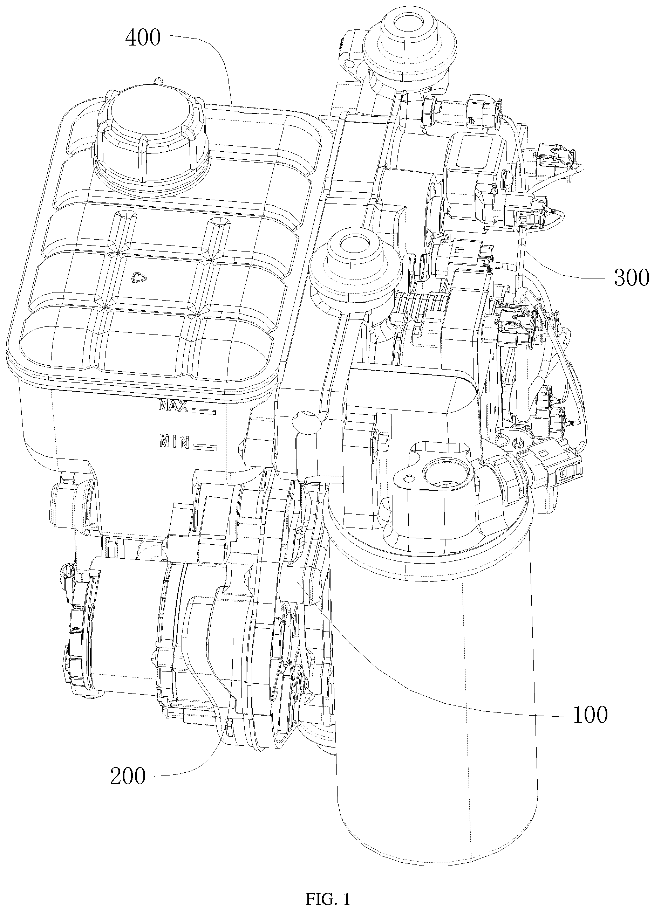

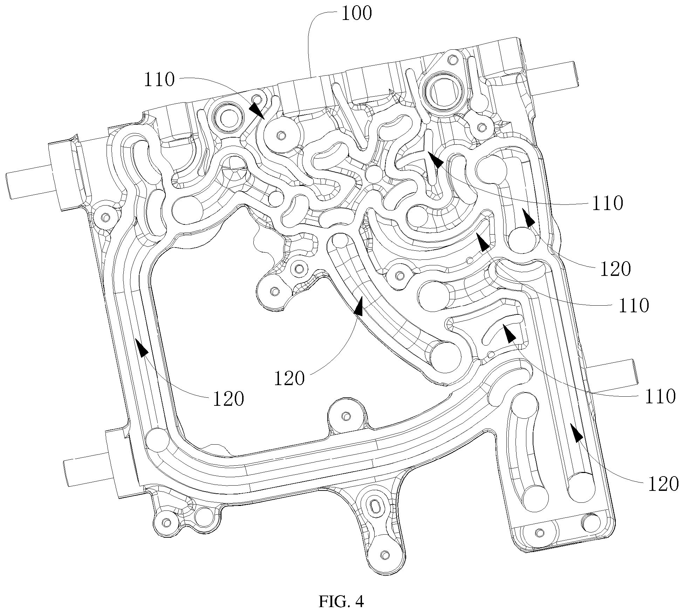

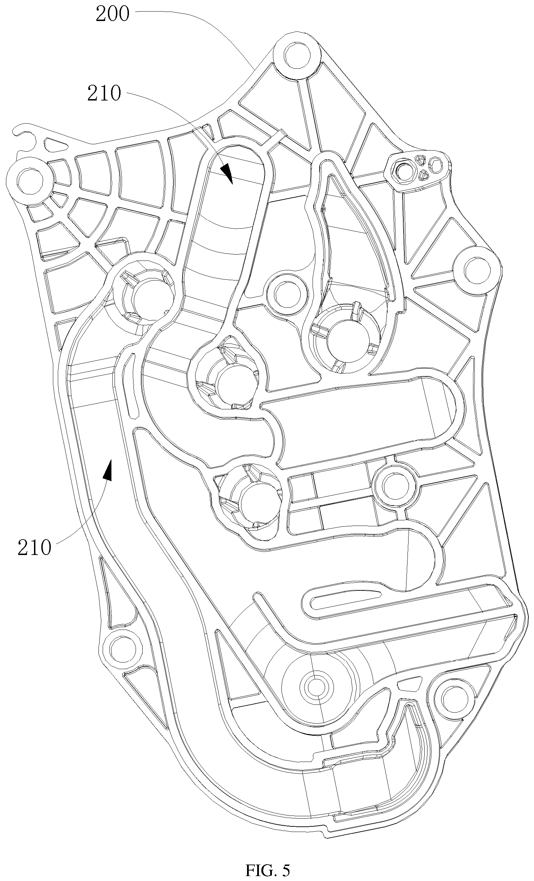

Referring to FIGS. 1-7, the thermal management integrated module includes a refrigerant-side flow channel plate 100, a coolant-side flow channel plate 200, a refrigerant-side assembly 300, a coolant-side assembly 400, and a chiller 500. The coolant-side assembly 400 is connected to the coolant-side flow channel plate 200. The coolant-side flow channel plate 200 is arranged with multiple first flow channels 210. The refrigerant-side assembly 300 and the chiller 500 are respectively connected to the refrigerant-side flow channel plate 100. The refrigerant-side flow channel plate 100 is arranged with multiple second flow channels 120.

It should be noted that the refrigerant-side assembly 300 includes multiple components.

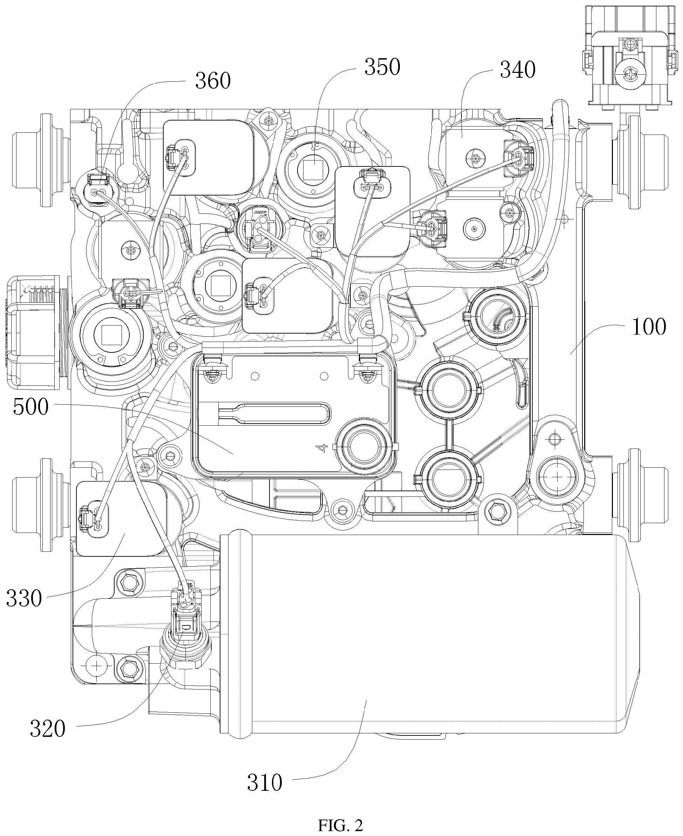

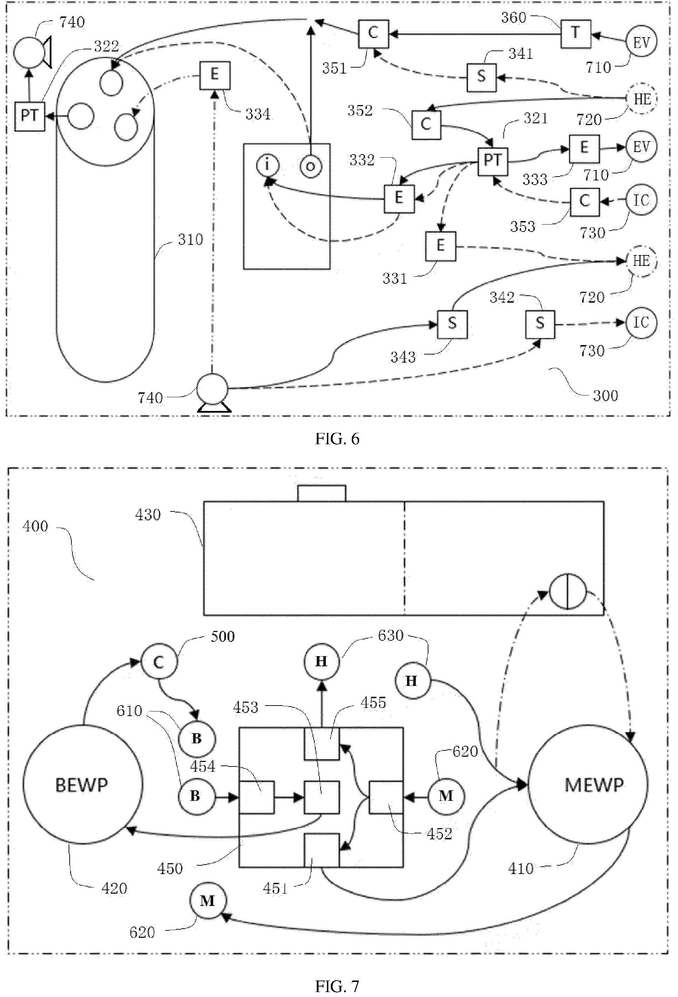

In some embodiments, as shown in FIGS. 2 and 6, the refrigerant-side assembly 300 includes but is not limited to a gas-liquid separator 310, a pressure-temperature inductor 320, a temperature sensor 360, an electronic expansion valve 330, a solenoid stop valve 340, and a check valve 350.

Additionally, it should be noted that the number of each of the pressure-temperature inductor 320, the electronic expansion valve 330, the solenoid stop valve 340, and the check valve 350 may be one or more.

Similarly, the coolant-side assembly 400 also includes multiple components.

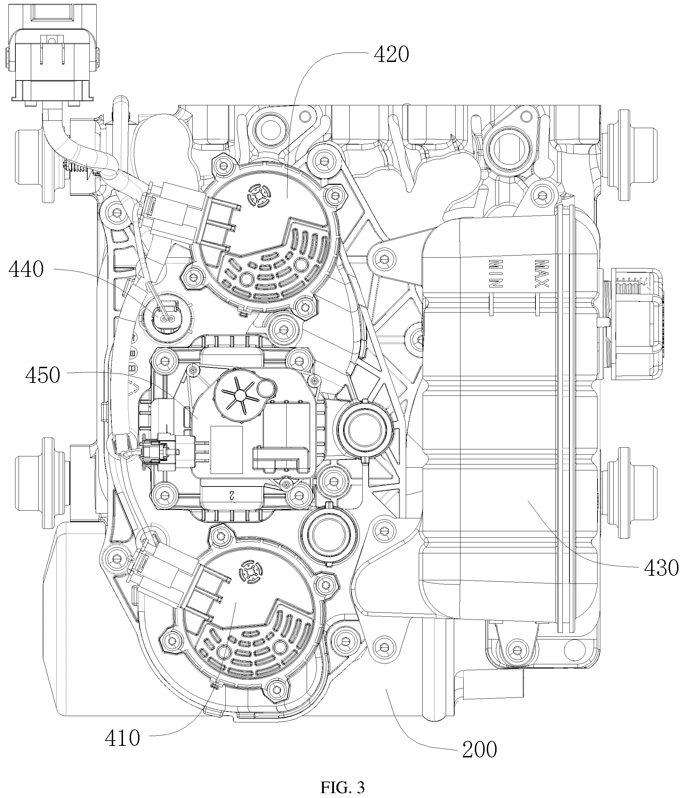

In some embodiments, as shown in FIGS. 3 and 7, the coolant-side assembly 400 includes but is not limited to a motor electric water pump 410, a battery electric water pump 420, a control valve 450, an integrated water tank 430, and a water temperature sensor 440. The motor electric water pump 410 and the battery electric water pump 420 may be respectively communicated with the integrated water tank 430 through the control valve 450. The water temperature sensor 440 is arranged on the coolant-side flow channel plate 200 and is configured to detect a temperature of a medium (coolant) in the coolant-side flow channel plate 200.

It should be noted that the integrated water tank 430 integrates a motor water tank and a battery water tank, enabling the overall structure to be more compact. This may ensure the reliability of the system and at the same time, reduce the amount of coolant required in the thermal management integrated module, shorten the filling time, and further lower costs. Additionally, the integrated water tank 430 is communicated with the coolant-side flow channel plate 200 via a pair of interfaces (one inlet and one outlet). The pair of interfaces are arranged at an inlet of the motor electric water pump 410, ensuring the water supply function of the motor electric water pump 410. At the same time, through the optimal distribution of an inlet flow channel and an outlet flow channel, it may also achieve the degassing function of the coolant-side assembly 400 and the coolant-side flow channel plate 200.

In some embodiments, as shown in FIGS. 3 and 7, the motor electric water pump 410, the battery electric water pump 420, and the integrated water tank 430 are arranged around a periphery of the control valve 450.

The coolant-side assembly 400 and the chiller 500 may be communicated via each of the multiple corresponding first flow channels 210 to form multiple groups of coolant-side heat exchange open circuits. The refrigerant-side assembly 300 and the chiller 500 may be communicated via each of the multiple corresponding second flow channels 120 to form multiple refrigerant-side heat exchange open circuits. The multiple refrigerant-side heat exchange open circuits and the multiple coolant-side heat exchange open circuits may exchange heat through the chiller 500.

It should be noted that the multiple refrigerant-side heat exchange open circuits and the multiple coolant-side heat exchange open circuit may be respectively communicated with a corresponding external heat exchange structure, forming a corresponding heat exchange circulation circuit.

Furthermore, it should be noted that the external heat exchange structure includes, but is not limited to: a power battery 610, a motor assembly 620, a low-temperature radiator 630, an evaporator 710, an outdoor heat exchanger 720, an indoor condenser 730, and a compressor 740.

An end of the coolant-side flow channel plate 200 away from an end of the coolant-side assembly 400 and an end of the refrigerant-side flow channel plate 100 away from the refrigerant-side assembly 300 are connected to form an integrated plate structure.

In some embodiments, the coolant-side flow channel plate 200 and the refrigerant-side flow channel plate 100 may be detachably connected.

This arrangement helps reduce the difficulty of disassembling and assembling the coolant-side flow channel plate 200 and the refrigerant-side flow channel plate 100.

In some embodiments, the coolant-side flow channel plate 200 is fixed to the refrigerant-side flow channel plate 100 by a bolt or a buckle, reducing a number of assembly fixation points for the coolant-side flow channel plate 200 with respect to the new energy vehicle. This also shortens the channel between the coolant-side assembly 400 and the refrigerant-side assembly 300, enabling the overall structure to be more compact, greatly reducing costs, and enhancing the adaptability of the engine room arrangement.

In some embodiments, the coolant-side flow channel plate 200 and the refrigerant-side flow channel plate 100 may also be welded or integrally formed.

The refrigerant-side flow channel plate 100 is defined with an insulation groove 110 penetrating along a thickness direction of the refrigerant-side flow channel plate 100 (i.e., in a direction from the refrigerant-side flow channel plate 100 to the coolant-side flow channel plate 200). The insulation groove 110 may be defined between at least part of adjacent second flow channels 120 to block the heat transfer between the adjacent second flow channels 120.

It can be understood that a circulation process of a refrigerant and a circulation process of a coolant are independent of each other. Therefore, by arranging the refrigerant-side flow channel plate 100 and the coolant-side flow channel plate 200, and with the coolant-side assembly 400 being arranged on a side of the coolant-side flow channel plate 200 away from the refrigerant-side flow channel plate 100, and the refrigerant-side assembly 300 being arranged on a side of the refrigerant-side flow channel plate 100 away from coolant-side flow channel plate 200, it is possible to effectively avoid interference between the coolant-side assembly 400 and the refrigerant-side assembly 300 during the arrangement process. This ensures that the layout of the thermal management integrated module is more reasonable.

Moreover, the coolant-side flow channel plate 200 is arranged with the multiple first flow channels 210. The coolant-side assembly 400 and the chiller 500 may be communicated via each of the multiple corresponding first flow channels 210 to form multiple coolant-side heat exchange open circuits. The refrigerant-side flow channel plate 100 is arranged with the multiple second flow channels 120. The refrigerant-side assembly 300 and the chiller 500 may be communicated via each of the multiple corresponding second flow channels 120 to form multiple refrigerant-side heat exchange open circuits. Therefore, compared to pipeline connections, this arrangement significantly reduces the assembly volume of the entire thermal management integrated module and significantly improves the assembly integration of the thermal management module.

Furthermore, the insulation groove 110 may be defined between at least part of adjacent second flow channels 120 and the insulation groove 110 penetrates the refrigerant-side flow channel plate 100. Therefore, the heat transfer between the adjacent second flow channels 120 is greatly reduced, effectively avoiding heat transfer interference issue in the thermal management integrated module.

It should be noted that a temperature difference of the refrigerant-side under different working conditions is relatively large, and thus it is necessary to prevent heat transfer, while a temperature difference of the coolant-side is not significant, so there is no need to implement a heat transfer prevention design for the coolant-side.

In some embodiments, as shown in FIG. 7, the control valve 450 is a multi-port valve. The multi-port valve is defined with a first communication port 451, a second communication port 452, a third communication port 453, a fourth communication port 454, and a fifth communication port 455. The multi-port valve may be communicated with the motor electric water pump 410 through the first communication port 451, communicated with an outlet of the motor assembly 620 through the second communication port 452, communicated with the battery electric water pump 420 through the third communication port 453, communicated with an outlet of the power battery 610 through the fourth communication port 454, and communicated with the low-temperature radiator 630 through the fifth communication port 455.

This arrangement improves the thermal management efficiency of the power battery 610 and the motor assembly 620.

In some embodiments, various communication modes of the coolant-side assembly 400 are as follows.

In a first mode, the power battery 610, the fourth communication port 454, the first communication port 451, the integrated water tank 430, the motor electric water pump 410, the motor assembly 620, the second communication port 452, the third communication port 453, the battery electric water pump 420, the chiller 500, and the power battery 610 may be sequentially communicated.

In this mode, a residual heat from the motor assembly 620 may be used to heat the power battery 610.

In this mode, a small portion of the coolant enters the motor electric water pump 410 through the integrated water tank 430 from the first communication port 451, which serves to separate gas and liquid. A large portion of the coolant directly enters the motor electric water pump 410 from the first communication port 451.

In a second mode, the power battery 610, the fourth communication port 454, the fifth communication port 455, the low-temperature radiator 630, the integrated water tank 430, the motor electric water pump 410, the motor assembly 620, the second communication port 452, the third communication port 453, the battery electric water pump 420, the chiller 500, and the power battery 610 may be sequentially communicated.

In this mode, the low-temperature radiator 630 may be configured to activate a passive cooling mode of the power battery 610.

In this mode, a small portion of the coolant enters the motor electric water pump 410 through the integrated water tank 430 from the low-temperature radiator 630, which serves to separate gas and liquid. A large portion of the coolant directly enters the motor electric water pump 410 from the low-temperature radiator 630.

In a third mode, the motor assembly 620, the second communication port 452, the first communication port 451, the integrated water tank 430, the motor electric water pump 410, and the motor assembly 620 are sequentially communicated. Additionally, the power battery 610, the fourth communication port 454, the third communication port 453, the battery electric water pump 420, the chiller 500, and the power battery 610 are sequentially communicated.

In this mode, the motor assembly 620 enters a heat storage mode.

In this mode, a small portion of the coolant enters the motor electric water pump 410 through the integrated water tank 430 from the first communication port 451, which serves to separate gas and liquid. A large portion of the coolant directly enters the motor electric water pump 410 from the first communication port 451.

In a fourth mode, the motor assembly 620, the second communication port 452, the fifth communication port 455, the low-temperature radiator 630, the integrated water tank 430, the motor electric water pump 410, and the motor assembly 620 are sequentially communicated, which serves to utilize the low-temperature radiator 630 to dissipate a heat from the motor assembly 620. Additionally, the power battery 610, the fourth communication port 454, the third communication port 453, the battery electric water pump 420, the chiller 500, and the power battery 610 are sequentially communicated.

In this mode, the motor assembly 620 and the power battery 610 enter an independent heat dissipation mode.

In this mode, a small portion of the coolant enters the motor electric water pump 410 through the integrated water tank 430 from the low-temperature radiator 630 to separate gas and liquid. A large portion of the coolant directly enters the motor electric water pump 410 from the low-temperature radiator 630.

From the above, it can be seen that the multi-port valve with five ports and the dual liquid pumps (motor electric water pump 410 and battery electric water pump 420) are designed to match each other. Through the highly optimized flow channel design within the coolant-side flow channel plate 200, coolant circuits between each component are maximized in compactness, reducing the flow distance of the coolant, lowering flow resistance, and reducing costs.

In some embodiments, as shown in FIG. 6, the pressure-temperature inductor 320 includes a first pressure-temperature sensor 321 and a second pressure-temperature sensor 322. The electronic expansion valve 330 includes a first expansion valve 331, a second expansion valve 332, a third expansion valve 333, and a fourth expansion valve 334. The solenoid stop valve 340 includes a first stop valve 341, a second stop valve 342, and a third stop valve 343. The check valve 350 includes a first check valve 351, a second check valve 352, and a third check valve 353.

Various communication modes of the refrigerant-side assembly 300 are as follows.

In a first mode, the compressor 740, the third stop valve 343, the outdoor heat exchanger 720, the second check valve 352, the first pressure-temperature sensor 321, the second expansion valve 332, the chiller 500, the gas-liquid separator 310, the second pressure-temperature sensor 322, and the compressor 740 are sequentially communicated.

It should be noted that in a working condition of the First mode, the third stop valve 343 is in a normally open mode.

In this mode, the refrigerant is cooled by the outdoor heat exchanger 720, and through the throttling and pressure reduction effect of the second expansion valve 332, a temperature of the refrigerant is lowered so that the refrigerant may dissipate a heat of the power battery 610 via the chiller 500.

In a second mode, the compressor 740, the third stop valve 343, the outdoor heat exchanger 720, the second check valve 352, the first pressure-temperature sensor 321, the third expansion valve 333, the evaporator 710, the temperature sensor 360, the first check valve 351, the gas-liquid separator 310, the second pressure-temperature sensor 322, and an inlet of the compressor 740 are sequentially communicated.

It should be noted that in a working condition of the second mode, the third stop valve 343 is in the normally open mode.

In this mode, a heat of the refrigerant is dissipated by the outdoor heat exchanger 720, and through the throttling and pressure reduction effect of the third expansion valve 333, the temperature of the refrigerant is lowered so that the refrigerant may cool the passenger cabin via the evaporator 710.

In a third mode, the first mode and the second mode are combined. That is, the refrigerant splits into two paths through the outdoor heat exchanger 720, and then both paths enter the gas-liquid separator 310. In this mode, the thermal management integrated module is in a dual cooling mode.

In a fourth mode, in a first path, the compressor 740, the outdoor heat exchanger 720, the third expansion valve 333, the evaporator 710, the gas-liquid separator 310, and compressor 740 are sequentially communicated. In a second path, the compressor 740, the indoor condenser 730, the third expansion valve 333, the evaporator 710, the gas-liquid separator 310, and the compressor 740 are sequentially communicated. A flow ratio between the first path and the second path is 1.5/1. In this mode, an ambient temperature is between 18 degrees Celsius and 25 degrees Celsius and the mode is in a cooling and dehumidification mode.

In a fifth mode, in a first path, the compressor 740, the indoor condenser 730, the second expansion valve 332, the chiller 500, the gas-liquid separator 310, and the compressor 740 are sequentially communicated. In a second path, the compressor 740, the indoor condenser 730, the third expansion valve 333, the evaporator 710, the gas-liquid separator 310, and the compressor 740 are sequentially communicated. The flow ratio between the first path and the second path is 1.2/1. In this mode, the ambient temperature is between 13 degrees Celsius and 20 degrees Celsius and the mode is in a heating and dehumidification mode.

In a sixth mode, the compressor 740, the indoor condenser 730, the third expansion valve 333, the evaporator 710, the gas-liquid separator 310, and the compressor 740 are sequentially communicated. In this mode, an ambient temperature is between 7 degrees Celsius and 15 degrees Celsius and the mode is in a heat pump heating and dehumidification mode.

In a seventh mode, the compressor 740, the second stop valve 342, the indoor condenser 730, the third check valve 353, the first pressure-temperature sensor 321, the first expansion valve 331, the outdoor heat exchanger 720, the first stop valve 341, the first check valve 351, the gas-liquid separator 310, the second pressure-temperature sensor 322, and the compressor 740 are sequentially communicated.

It should be noted that in a working condition of the seventh mode, the third stop valve 343 is a normally open valve but is closed in this mode, the second stop valve 342 is a normally closed valve but is open in this mode, and the first stop valve 341 is a normally closed valve but is open in this mode.

In this mode, the refrigerant that has a high temperature directly releases a large amount of heat through the indoor condenser 730 to heat the passenger cabin.

In an eighth mode, the compressor 740, the fourth expansion valve 334, the gas-liquid separator 310, the second pressure-temperature sensor 322, and the inlet of the compressor 740 are sequentially communicated. Additionally, the compressor 740, the second stop valve 342, the indoor condenser 730, the third check valve 353, the first pressure-temperature sensor 321, the second expansion valve 332, the gas-liquid separator 310, the second pressure-temperature sensor 322, and the compressor 740 are sequentially communicated.

This mode is primarily used for heating in extremely low-temperature environments. In some embodiments, when the ambient temperature is extremely low (below -10 degrees Celsius), the outdoor heat exchanger 720 is unable to absorb heat from the air or can only absorb very little heat due to the physical properties of the refrigerant (mainly 1,1,1,2-Tetrafluoroethane, known as R134a), and the outdoor heat exchanger 720 cannot meet the heating needs for the passenger cabin. In this case, a hot gas bypass (i.e., a circulation circuit of the outlet of the compressor 740, the fourth expansion valve 334, the gas-liquid separator 310, the second pressure-temperature sensor 322, and the compressor 740 inlet) may provide an additional load to increase the flow of the compressor 740, thereby increasing the electrical power of the compressor 740 and meeting the required heating demand.

In some embodiments, the inlet of the chiller 500 and an end face of the coolant-side flow channel plate 200 apply a sealing connection, and the outlet of the chiller 500 is arranged on the chiller 500.

With this arrangement, a sealing structure between the chiller 500 and the end face of the coolant-side flow channel plate 200 may be reduced, and an external interface of the coolant-side flow channel plate 200 may be reduced, thereby saving layout space and achieving optimal space and cost efficiency.

In some embodiments, the coolant-side flow channel plate 200 applies injection-moulded and hot plate welding, or the coolant-side flow channel plate 200 applies injection-moulded and laser welding. The refrigerant-side flow channel plate 100 applies forging and brazing, or the refrigerant-side flow channel plate 100 applies casting and laser welding.

This arrangement helps improve the processing accuracy of the coolant-side flow channel plate 200 and the refrigerant-side flow channel plate 100 and reduces the difficulty in manufacturing both the coolant-side flow channel plate 200 and the refrigerant-side flow channel plate 100.

In some embodiments, the refrigerant-side assembly 300 and chiller 500 are detachably connected to the refrigerant-side flow channel plate 100. The coolant-side assembly 400 is detachably connected to the coolant-side flow channel plate 200.

This arrangement significantly facilitates the assembly and disassembly of the refrigerant-side assembly 300, the coolant-side assembly 400, and the chiller 500, effectively improving the disassembly and assembly efficiency of the thermal management integrated module.

In some embodiments, the integrated water tank 430 and the coolant-side flow channel plate 200 are connected by a five-point bolted connection. A connection part between the integrated water tank 430 and the coolant-side flow channel plate 200 is radially sealed by an O-shaped ring.

It should be noted that a radial sealing means that the O-shaped ring is arranged between an external wall of a connection protrusion of the integrated water tank 430 and an inner wall of a connection hole of the coolant-side flow channel plate 200. An inner circumference of the O-shaped ring is compressed to seal the external wall of the connection protrusion of the integrated water tank 430 along a radial direction of the connection hole of the coolant-side flow channel plate 200. An outer circumference of the O-shaped ring is radially compressed to seal the inner wall of the connection hole of the coolant-side flow channel plate 200 along a radial direction of the connection hole of the coolant-side flow channel plate 200.

In some embodiments, the control valve 450 and the coolant-side flow channel plate 200 are connected by a four-point bolted connection. The connection part between the control valve 450 and the coolant-side flow channel plate 200 applies an end-face sealing using an X-shaped ring.

It should be noted that an end-face sealing means that two end faces of the X-shaped ring are compressed to seal between the control valve 450 and the coolant-side flow channel plate 200.

In some embodiments, the battery electric water pump 420 and the coolant-side flow channel plate 200 are connected by the four-point bolted connection. The connection part between the battery electric water pump 420 and the coolant-side flow channel plate 200 is radially sealed by the O-shaped ring.

In some embodiments, the motor electric water pump 410 and the coolant-side flow channel plate 200 are connected by the four-point bolted connection. The connection part between the motor electric water pump 410 and the coolant-side flow channel plate 200 is radially sealed by the O-shaped ring.

In some embodiments, the water temperature sensor 440 and the coolant-side flow channel plate 200 are connected by a snap-fit. The water temperature sensor 440 and the coolant-side flow channel plate 200 are radially sealed by the O-shaped ring.

From the above, it can be seen that the coolant-side flow channel plate 200 not only facilitates the inter-communication of the coolant-side assembly 400, but also serves as a carrier for the coolant-side assembly 400 to support the coolant-side assembly 400.

It should be noted that the above bolted connections may also be replaced with a snap-fit connection.

In some embodiments, the gas-liquid separator 310 and the refrigerant-side flow channel plate 100 are connected by a three-point bolted connection. An interface of the gas-liquid separator 310 and an interface of the refrigerant-side flow channel plate 100 are radially sealed by one or two O-shaped rings.

In some embodiments, the gas-liquid separator 310 and the second pressure-temperature sensor 322 are connected by a thread connection. The gas-liquid separator 310 and the second pressure-temperature sensor 322 are radially sealed by the O-shaped ring.

In some embodiments, the chiller 500 and the refrigerant-side flow channel plate 100 are connected by the four-point bolted connection. An interface of the chiller 500 and an interface of the refrigerant-side flow channel plate 100 are radially sealed by one or two O-shaped rings.

In some embodiments, the temperature sensor 360 and the refrigerant-side flow channel plate 100 are connected by the thread connection. The temperature sensor 360 and the refrigerant-side flow channel plate 100 are radially sealed by the O-shaped ring.

In some embodiments, the first pressure-temperature sensor 321 and the refrigerant-side flow channel plate 100 are connected by the thread connection. The first pressure-temperature sensor 321 and the refrigerant-side flow channel plate 100 are radially sealed by the O-shaped ring.

In some embodiments, the solenoid stop valve 340 and the refrigerant-side flow channel plate 100 are connected by the thread connection. An interface of the solenoid stop valve 340 and an interface of the refrigerant-side flow channel plate 100 are radially sealed by one or two O-shaped rings.

In some embodiments, the check valve 350 and the refrigerant-side flow channel plate 100 are connected by the thread connection. An interface of the check valve 350 and an interface of the refrigerant-side flow channel plate 100 are radially sealed by one or two O-shaped rings.

In some embodiments, a valve core part of the electronic expansion valve 330 and the refrigerant-side flow channel plate 100 are connected by the thread connection. The valve core part of the electronic expansion valve 330 and the refrigerant-side flow channel plate 100 are radially sealed by the O-shaped ring. A coil part of the electronic expansion valve 330 is connected to the refrigerant-side flow channel plate 100 by the bolted connection. The coil part and the valve core part of the electronic expansion valve 330 are radially sealed by the X-shaped ring.

It should be noted that the above bolted connections may also be replaced with a snap-fit connection.

Not limited to the above, in other embodiments, the refrigerant-side assembly 300 and the chiller 500 may also be welded respectively to the refrigerant-side flow channel plate 100. The coolant-side assembly 400 may be welded to the coolant-side flow channel plate 200.

In summary, the thermal management integrated module provided by the present disclosure highly integrates the coolant-side assembly 400 and the refrigerant-side assembly 300. As a result, the coolant-side assembly 400 fixed to the coolant-side flow channel plate 200 and the refrigerant-side assembly 300 fixed to the refrigerant-side flow channel plate 100 each reduce the number of metal brackets by an average of 1 to 2 per component.

Each first flow channel 210 arranged on the coolant-side flow channel plate 200 and each second flow channel 120 arranged on the refrigerant-side flow channel plate 100 are equivalent to a pipe in the traditional design. After integration, the overall design saves more than 10 brackets and more than 20 pipes. This not only simplifies the engine room arrangement but also significantly reduces the volume, weight, and cost of the thermal management integrated module.

Furthermore, since the coolant-side flow channel plate 200 and the refrigerant-side flow channel plate 100 integrate more than 20 pipes from the traditional design, the overall flow resistance of the coolant and refrigerant is reduced. Additionally, the circulation distance of the coolant and refrigerant is greatly shortened, reducing heat loss during flow and improving energy utilization efficiency.

Moreover, after such integration, the takt time of the vehicle manufacturing line may be improved, increasing the overall production efficiency and reducing the labor intensity of workers on the vehicle assembly line. The assembly plant only needs to manage one part number, thus reducing management costs.

The present disclosure further provides a new energy vehicle. The new energy vehicle includes any of the thermal management integrated modules described in the previous embodiments.

The various technical features of the above-described embodiments may be combined arbitrarily. In order to simplify the description, all possible combinations of the various technical features of the above-described embodiments have not been described. However, as long as there is no contradiction in the combinations of these technical features, all of them should be regarded as being within the scope of the present disclosure.

The above-described embodiments are only several embodiments of the present disclosure, which are described in a more specific and detailed manner, but are not to be construed as a limitation of the scope of the present disclosure. It should be pointed out that, for those skilled in the art, multiple deformations and improvements may be made without departing from the conception of the present disclosure, all of which shall fall within the scope of protection of the present disclosure. Therefore, the scope of the present disclosure shall be subject to the claims.

In the description of the present disclosure, it should be understood that the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential", etc. indicate orientation or positional relationships based on those shown in the accompanying drawings, and are intended only to facilitate the description of the present disclosure and to simplify the description, and are not intended to indicate or imply that the device or element referred to must have a particular orientation, or be constructed and operated in a particular orientation. Therefore, the above terms cannot be construed as a limitation of the present disclosure.

Furthermore, the terms "first" and "second" are used for descriptive purposes only and are not to be understood as indicating or implying relative importance or implicitly specifying the number of technical features indicated. Thus, a feature defined with the terms "first", and "second" may expressly or impliedly include at least one such feature. In the description of the present disclosure, "multiple" means at least two, e.g., two, three, etc., unless otherwise expressly and specifically limited.

In the present disclosure, unless otherwise expressly provided and limited, the terms "mounted", "connected with", "connected to", "fixed", etc. should be broadly construed, i.e., as a fixed connection, a detachable connection, or a one-piece connection; a mechanical connection or an electrical connection; a direct connection, an indirect connection through an intermediate medium, or a communication or interaction between two elements. For those skilled in the art, the specific meanings of the above terms in the present disclosure may be understood on a case-by-case basis.

In the present disclosure, unless otherwise expressly provided and limited, a first feature "over" or "under" a second feature may be a direct contact between the first feature and the second feature, or an indirect contact between the first feature and the second feature through an intermediate medium. Furthermore, expressions such as the first feature "over" the second feature, the first feature "above" the second feature, and the first feature "on top of" the second feature may be that the first feature is directly above or diagonally above the second feature, or simply that the first feature is horizontally higher than the second feature. Expressions such as the first feature "below" the second feature, the first feature "under" the second feature, and the first feature "underneath" the second feature may be that the first feature is directly below or diagonally below the second feature, or simply that the first feature is horizontally below the second feature.

It should be noted that when an element is said to be "fixed to" or "arranged on" another element, it may be directly on the other element or there may also be an element in between. When an element is said to be "attached" to another element, it may be directly attached to the other element or there may also be an element in between. The terms "vertical", "horizontal", "top", "bottom", "left", "right" and similar expressions are used herein for illustrative purposes only and are not intended to be the exclusive means of implementation.

Unless otherwise defined, all technical and scientific terms used in the present disclosure have the same meaning as commonly understood by those skilled in the art. Terms used herein in the specification of the present disclosure are used only for the purpose of describing specific embodiments and are not intended to limit the present disclosure. The term "and/or" includes any and all combinations of one or more of the relevant listed items.

## Claims

1. A thermal management integrated module, **characterized by** comprising:
a refrigerant-side flow channel plate (100), a coolant-side flow channel plate (200), a refrigerant-side assembly (300), a coolant-side assembly (400), and a chiller (500), wherein the coolant-side assembly (400) is connected to the coolant-side flow channel plate (200), the coolant-side flow channel plate (200) is arranged with a plurality of first flow channels (210), the refrigerant-side assembly (300) and the chiller (500) are respectively connected to the refrigerant-side flow channel plate (100), the refrigerant-side flow channel plate (100) is arranged with a plurality of second flow channels (120);
wherein the coolant-side assembly (400) and the chiller (500) are communicated via each of the plurality of the first flow channels (210) to form a plurality of coolant-side heat exchange open circuits, the refrigerant-side assembly (300) and the chiller (500) are communicated via each of the plurality of the second flow channels (120) to form a plurality of refrigerant-side heat exchange open circuits, the plurality of the coolant-side heat exchange open circuits and the plurality of the refrigerant-side heat exchange open circuits perform heat exchange via the chiller (500);
wherein an end of the coolant-side flow channel plate (200) away from the coolant-side assembly (400) is connected to an end of the refrigerant-side flow channel plate (100) away from the refrigerant-side assembly (300), the refrigerant-side flow channel plate (100) is defined with an insulation groove (110) penetrating along a thickness direction of the refrigerant-side flow channel plate (100), the insulation groove (110) may be defined between at least part of adjacent second flow channels (120) to block a heat transfer between the adjacent second flow channels (120).

2. The thermal management integrated module as claimed in claim 1, wherein the coolant-side assembly (400) comprises a motor electric water pump (410), a battery electric water pump (420), a control valve (450), and an integrated water tank (430), the control valve (450) is a multi-port valve, the multi-port valve is defined with a first communication port (451), a second communication port (452), a third communication port (453), a fourth communication port (454), and a fifth communication port (455), the first communication port (451) communicates with the motor electric water pump (410), the second communication port (452) communicates with an outlet of a motor assembly (620), the third communication port (453) communicates with the battery electric water pump (420), the fourth communication port (454) communicates with an outlet of a power battery (610), and the fifth communication port (455) communicates with an inlet of a low-temperature radiator (630);
wherein in a first mode, the power battery (610), the fourth communication port (454), the first communication port (451), the integrated water tank (430), the motor electric water pump (410), the motor assembly (620), the second communication port (452), the third communication port (453), the battery electric water pump (420), the chiller (500), and the power battery (610) are sequentially communicated;
wherein in a second mode, the power battery (610), the fourth communication port (454), the fifth communication port (455), the low-temperature radiator (630), the integrated water tank (430), the motor electric water pump (410), the motor assembly (620), the second communication port (452), the third communication port (453), the battery electric water pump (420), the chiller (500), and the power battery (610) are sequentially communicated;
wherein in a third mode, the motor assembly (620), the second communication port (452), the first communication port (451), the integrated water tank (430), and the motor electric water pump (410) are sequentially communicated; and the power battery (610), the fourth communication port (454), the third communication port (453), the battery electric water pump (420), the chiller (500), and the power battery (610) are sequentially communicated;
wherein in a fourth mode, the motor assembly (620), the second communication port (452), the fifth communication port (455), the low-temperature radiator (630), the integrated water tank (430), and the motor electric water pump (410) are sequentially communicated; and the power battery (610), the fourth communication port (454), the third communication port (453), the battery electric water pump (420), the chiller (500), and the power battery (610) are sequentially communicated;
wherein in the first mode and the third mode, a portion of a coolant enters the motor electric water pump (410) from the first communication port (451) through the integrated water tank (430), another portion of the coolant directly enters the motor electric water pump (410) from the first communication port (451);
wherein in the second mode and the fourth mode, a portion of the coolant enters the motor electric water pump (410) from the low-temperature radiator (630) through the integrated water tank (430), another portion of the coolant directly enters the motor electric water pump (410) from the low-temperature radiator (630).

3. The thermal management integrated module as claimed in claim 2, wherein the motor electric water pump (410), the battery electric water pump (420), and the integrated water tank (430) are arranged around a periphery of the control valve (450).

4. The thermal management integrated module as claimed in claim 2, wherein the integrated water tank (430) and the coolant-side flow channel plate (200) are connected by a bolted connection, and a connection part between the integrated water tank (430) and the coolant-side flow channel plate (200) is radially sealed by an O-shaped ring;
and/or, the control valve (450) and the coolant-side flow channel plate (200) are connected by the bolted connection, and a connection part between the control valve (450) and the coolant-side flow channel plate (200) is sealed at an end-face by an X-shaped ring;
and/or, the battery electric water pump (420) and the coolant-side flow channel plate (200) are connected by the bolted connection, and a connection part between the battery electric water pump (420) and the coolant-side flow channel plate (200) is radially sealed by the O-shaped ring;
and/or, the motor electric water pump (410) and the coolant-side flow channel plate (200) are connected by the bolted connection, and a connection part between the motor electric water pump (410) and the coolant-side flow channel plate (200) is radially sealed by the O-shaped ring.

5. The thermal management integrated module as claimed in claim 1, wherein the refrigerant-side assembly (300) comprises a gas-liquid separator (310) and an electronic expansion valve (330), the electronic expansion valve (330) comprises a first expansion valve (331), a second expansion valve (332), a third expansion valve (333), and a fourth expansion valve (334), the refrigerant-side assembly (300) has a plurality of communication modes as follows:
in a first mode, a compressor (740), an outdoor heat exchanger (720), the second expansion valve (332), the chiller (500), the gas-liquid separator (310), and the compressor (740) are communicated sequentially;
in a second mode, the compressor (740), the outdoor heat exchanger (720), the third expansion valve (333), an evaporator (710), the gas-liquid separator (310), and the compressor (740) are communicated sequentially;
in a third mode, the first mode and the second mode are combined;
in a fourth mode, the compressor (740), the outdoor heat exchanger (720), the third expansion valve (333), the evaporator (710), the gas-liquid separator (310), and the compressor (740) are communicated sequentially; and the compressor (740), an indoor condenser (730), the third expansion valve (333), the evaporator (710), the gas-liquid separator (310), and the compressor (740) are communicated sequentially;
in a fifth mode, the compressor (740), the indoor condenser (730), the second expansion valve (332), the chiller (500), the gas-liquid separator (310), and the compressor (740) are communicated sequentially; and the compressor (740), the indoor condenser (730), the third expansion valve (333), the evaporator (710), the gas-liquid separator (310), and the compressor (740) are communicated sequentially;
in a sixth mode, the compressor (740), the indoor condenser (730), the third expansion valve (333), the evaporator (710), the gas-liquid separator (310), and the compressor (740) are communicated sequentially;
in a seventh mode: the compressor (740), the indoor condenser (730), the first expansion valve (331), the outdoor heat exchanger (720), the gas-liquid separator (310), and the compressor (740) are communicated sequentially; and
in an eighth mode: the compressor (740), the fourth expansion valve (334), the gas-liquid separator (310), and the compressor (740) are communicated sequentially; and the compressor (740), the indoor condenser (730), the second expansion valve (332), the gas-liquid separator (310), and the compressor (740) are communicated sequentially.

6. The thermal management integrated module as claimed in claim 5, wherein the gas-liquid separator (310) and the refrigerant-side flow channel plate (100) are connected by a bolt connection, and an interface of the gas-liquid separator (310) and an interface of the refrigerant-side flow channel plate (100) are radially sealed by an O-shaped ring;
and/or, the chiller (500) and the refrigerant-side flow channel plate (100) are connected by the bolt connection, and an interface of the chiller (500) and the interface of the refrigerant-side flow channel plate (100) are radially sealed by the O-shaped ring.

7. The thermal management integrated module as claimed in claim 1, wherein the coolant-side flow channel plate (200) and the refrigerant-side flow channel plate (100) are detachably connected;
or, the coolant-side flow channel plate (200) and the refrigerant-side flow channel plate (100) are welded;
or, the coolant-side flow channel plate (200) and the refrigerant-side flow channel plate (100) are integrally formed.

8. The thermal management integrated module as claimed in claim 1, wherein the refrigerant-side assembly (300) and the chiller (500) are respectively and detachably connected to the refrigerant-side flow channel plate (100), and the coolant-side assembly (400) is detachably connected to the coolant-side flow channel plate (200).

9. The thermal management integrated module as claimed in claim 2, wherein the coolant-side assembly further comprises a water temperature sensor (440).

10. The thermal management integrated module as claimed in claim 9, wherein the water temperature sensor (440) and the coolant-side flow channel plate (200) are connected by a snap-fit, and the water temperature sensor (440) and the coolant-side flow channel plate (200) are radially sealed by an O-shaped ring.

11. The thermal management integrated module as claimed in claim 5, wherein the refrigerant-side assembly (300) further comprises at least one of a temperature sensor (360) and a solenoid stop valve (340).

12. The thermal management integrated module as claimed in claim 11, wherein the temperature sensor (360) and the refrigerant-side flow channel plate (100) are connected by a thread connection, and the temperature sensor and the refrigerant-side flow channel plate are radially sealed by an O-shaped ring.

13. The thermal management integrated module as claimed in claim 11, wherein the solenoid stop valve (340) and the refrigerant-side flow channel plate (100) are connected by a thread connection, an interface of the solenoid stop valve (340) and an interface of the refrigerant-side flow channel plate (100) are radially sealed by an O-shaped ring.

14. The thermal management integrated module as claimed in claim 1, wherein the refrigerant-side assembly (300) and the chiller (500) are respectively welded to the refrigerant-side flow channel plate (100), and the coolant-side assembly (400) is welded to the coolant-side flow channel plate (200).

15. A new energy vehicle, **characterized by** comprising the thermal management integrated module as claimed in any of claims 1 to 14.
